# EUROPÄISCHE PATENTANMELDUNG

(11) **EP 2 246 970 A2**
(43) Veröffentlichungstag der Anmeldung: **03.11.2010**
(21) Anmeldenummer: 10155729.6
(22) Anmeldetag: 08.03.2010
(51) Int. Cl.: H02P 6/18

(54) **Verfahren und Vorrichtung zum Bestimmen einer absoluten Winkellage eines Rotors eines kommutierten Elektromotors**

(30) Priorität: 27.04.2009 DE 102009002654
(71) Anmelder: Robert Bosch GmbH, 70442 Stuttgart (DE)
(72) Erfinder: Frey, Heiko, 71254, Ditzingen (DE)

(57) **Zusammenfassung**

Die Erfindung betrifft eine Vorrichtung und zum Bestimmen einer absoluten Winkellage eines Rotors (31) eines Elektromotors (3), umfassend:
- einen Signalgenerator (6) zum Bereitstellen eines Frequenzsignals mit einer vorgegebenen Frequenz;
- ein Kopplungselement (7), um das Frequenzsignal auf eine Ansteuerleitung (8), über die der Elektromotor (3) mit elektrischer Energie versorgt wird, einzukoppeln;
- ein Messelement, um eine Angabe zum Stehwellenverhältnis einer von dem Signalgenerator (6) zum Elektromotor (3) hinlaufenden Signalwelle des eingekoppelten Frequenzsignals zu einer von dem Elektromotor (3) zu dem Signalgenerator (6) laufenden Signalwelle des an dem Elektromotor (3) reflektierten Frequenzsignals zu detektieren und die Angabe zum Stehwellenverhältnis bereitzustellen.

## Beschreibung

### Technisches Gebiet

Die Erfindung betrifft ein Verfahren und eine Vorrichtung zum Bestimmen der absoluten Winkellage eines Rotors in einem Elektromotor.

### Stand der Technik

Zur Erfassung eines Drehwinkels bzw. der Winkellage bei rotatorischen Elektromotoren werden üblicherweise geeignete Sensoren verwendet. Diese Sensoren können beispielsweise Positionsgeber auf der Motorwelle des Elektromotors, an dem Rotor des Elektromotors bzw. an sonstigen durch den Elektromotor bewegten Teilen aufweisen. Die Positionsgeber können beispielsweise in Form von Ringmagneten, Pulsscheiben oder sonstigen Informationsträgern ausgebildet sein und mit Hilfe eines Detektors abgetastet werden, so dass mindestens eine Stellung des Rotors des Elektromotors eindeutig einer absoluten Winkellage zugeordnet werden kann.

Als Detektoren werden beispielsweise Hall-Sensoren verwendet, die eine von dem anliegenden Magnetfeld abhängige Hall-Spannung bereitstellen, über die Änderungen des Magnetfelds erkannt werden können. Alternativ kann auf indirekte Weise der Strom bei der Ansteuerung von Wicklungen des Elektromotors mit einer Ansteuerspannung ausgewertet werden und Schwankungen der Stromstärke über eine bestimmte Zeitdauer integriert werden, um die absolute Lage zu ermitteln.

Neben diesen Verfahren besteht die Möglichkeit, die Nuten eines Kommutators eines Elektromotors über die Stromaufnahme zu identifizieren. Überstreichen bei einer Drehung des Rotors mehrere Bürsten einer Bürstenanordnung des Kommutators eine oder mehrere Nuten, können dadurch zwei oder mehr als zwei Wicklungen des Rotors parallel geschaltet werden. Der veränderte gesamte Widerstand der Parallelschaltung bezüglich dem einer einzelnen Wicklung oder dem einer Parallelschaltung einer davon verschiedenen Anzahl von Wicklungen kann durch einen erhöhten Strom erfasst werden. Durch eine geeignete zeitliche Auswertung lässt sich daraus eine Angabe über die Winkellage ermitteln.

Aus der Druckschrift DE 10 361 062 A1 ist ein Verfahren zur Auswertung einer Drehzahl- und Drehlageinformation eines Gleichstrommotors bekannt. Die Ermittlung der Drehlage erfolgt, indem ein Frequenzsignal über den Kommutator an dem Rotor angelegt wird und ein resultierendes Frequenzsignal mit Hilfe einer FFT-Analyse ausgewertet wird. Dabei ergeben sich verschiedene Frequenzspektren, je nachdem, ob die Bürsten über einem Kommutatorelement oder über einer Nut liegen, so dass aufgrund des Wechsels zwischen den Frequenzspektren auf die Drehlage des Rotors geschlossen werden kann.

Aus der Druckschrift DE 10/2007 013 711 A1 ist ein Verfahren und eine Vorrichtung zur Dreherfassung eines bürstenbetriebenen Gleichstrommotors bekannt. Dabei wird auf eine Versorgungsgleichspannung für den Elektromotor ein Wechselspannungssignal aufmoduliert, mittels dessen der Verlauf des komplexen Widerstands des Gleichstrommotors ermittelt und für die Dreherfassung verwendet wird. Dazu wird der komplexe Widerstand einer Lamelle durch ein zusätzliches elektronisches Bauelement verändert. Dies stellt jedoch einen erhöhten Aufwand beim Aufbau eines solchen Gleichstrommotors dar.

Es ist Aufgabe der vorliegenden Erfindung, ein Verfahren und eine Vorrichtung zur Ermittlung der absoluten Winkellage eines bürstenbetriebenen Gleichstrommotors zur Verfügung zu stellen, die in einfacher Weise realisierbar sind und keine Modifikation des Elektromotors benötigen.

### Offenbarung der Erfindung

Diese Aufgabe wird durch die Vorrichtung zum Bestimmen der absoluten Winkellage eines Rotors eines bürstenbetriebenen Gleichstrommotors gemäß Anspruch 1 sowie durch das Motorsystem und das Verfahren gemäß den nebengeordneten Ansprüchen gelöst.

Weitere vorteilhafte Ausgestaltungen sind in den abhängigen Ansprüchen angegeben.

Gemäß einem ersten Aspekt ist eine Vorrichtung zum Bestimmen einer absoluten Winkellage eines Rotors eines Elektromotors vorgesehen. Die Vorrichtung umfasst:
- einen Signalgenerator zum Bereitstellen eines Frequenzsignals mit einer vorgegebenen Frequenz;
- ein Kopplungselement, um das Frequenzsignal auf eine Ansteuerleitung, über die der Elektromotor mit elektrischer Energie versorgt wird, einzukoppeln;
- ein Messelement, um eine Angabe zum Stehwellenverhältnis einer von dem Signalgenerator zum Elektromotor hinlaufenden Signalwelle des eingekoppelten Frequenzsignals zu einer von dem Elektromotor zu dem Signalgenerator laufenden Signalwelle des an dem Elektromotor reflektierten Frequenzsignals zu detektieren und die Angabe zum Stehwellenverhältnis bereitzustellen.

Eine Idee der Erfindung besteht darin, einen Anteil des von einem auf die Ansteuerleitung eingekoppelten Frequenzsignal reflektierten Signals zu erfassen und ein sogenanntes Stehwellenverhältnis (standing wave ratio, SWR) zu ermitteln, das das Verhältnis des eingekoppelten Frequenzsignals und des reflektierten Frequenzsignals darstellt. Das Stehwellenverhältnis kann zum Bestimmen der absoluten Winkellage des Rotors verwendet werden, da man aufgrund der in der Praxis auftretenden Unterschiede zwischen den komplexen Widerständen der Rotorwicklungen auf die absolute Winkellage des Rotors des Gleichstrommotors schließen kann. D.h. die Rotorwicklungen des Rotors des Gleichstrommotors bilden einen komplexen Widerstand, der in der Praxis für jede Rotorwicklung verschieden ist. Je nachdem, welche der Rotorwicklungen gerade über den Kommutator kontaktiert wird, ergibt sich somit bezüglich der Versorgungsleitung ein unterschiedlicher Abschluss der Ansteuerleitung hinsichtlich eines über die Ansteuerleitung angelegten Frequenzsignals. Da somit der Gleichstrommotor bzw. dessen einzelne Wicklungen in jedem Fall einen Resonator unterschiedlicher Eignung für ein über die Ansteuerleitung bereitgestelltes Frequenzsignal darstellen, wird ein Teil des Frequenzsignals in Richtung der Einkoppelstelle reflektiert. Während einer Drehung des Rotors werden dadurch die Resonanzeigenschaften mit der Rotorposition verändert, so dass sich auch der Anteil des reflektierten Frequenzsignals verändert.

Weiterhin kann das Kopplungselement das Frequenzsignal transformatorisch oder kapazitiv auf die Ansteuerleitung einkoppeln.

Gemäß einer Ausführungsform kann ein Filterelement vorgesehen sein, um das von dem Kopplungselement eingekoppelte Frequenzsignal an einer Ausbreitung über die Ansteuerleitung zu hindern.

Weiterhin kann das Messelement eine erste Detektionsleitung, die mit der Ansteuerleitung gekoppelt ist, um das eingekoppelte Frequenzsignal zu detektieren, und eine erste Auswerteschaltung aufweisen, um eine Angabe über die Amplitude einer zum Elektromotor laufenden Signalwelle des eingekoppelten Frequenzsignals bereitzustellen. Zudem kann das Messelement eine zweite Detektionsleitung, die mit der Ansteuerleitung gekoppelt ist, um das an dem Elektromotor reflektierte Frequenzsignal zu detektieren, und eine zweite Auswerteschaltung aufweisen, um eine Angabe über die Amplitude der vom Elektromotor kommenden Signalwelle des reflektierten Frequenzsignals bereitzustellen.

Es kann eine Auswerteeinheit vorgesehen sein, um aus den Angaben über die Amplitude der zum Elektromotor laufenden Signalwelle des eingekoppelten Frequenzsignals und über die Amplitude der vom Elektromotor kommenden Signalwelle des reflektierten Frequenzsignals das Stehwellenverhältnis zu ermitteln und dieses der absoluten Winkellage des Elektromotors zuzuordnen.

Gemäß einem weiteren Aspekt ist ein Motorsystem mit der obigen Vorrichtung und mit einem Elektromotor mit einem Rotor mit mehreren, abhängig von der Winkellage ansteuerbaren Wicklungen, die jeweils ein oder mehrere Spulenelemente aufweisen, vorgesehen, wobei der komplexe Widerstand mindestens einer der Wicklungen von dem komplexen Widerstand der anderen der mehreren Wicklungen verschieden ist.

Weiterhin kann ein Motorsystem vorgesehen sein, wobei der komplexe Widerstand der mindestens einen Wicklung
- durch serielles oder paralleles Verschalten mit einem Bauelement mit einem imaginären Widerstand; und/oder
- durch eine veränderte Anzahl von Windungen der Spulenelemente mindestens einer Wicklung; und/oder
- durch eine geschichtete Anordnung der Spulenelemente der mindestens einen Wicklung an einem Anker des Rotors bezüglich der anderen der mehreren Wicklungen; und/oder
- durch eine veränderte Lage eines der Spulenelemente der mindestens einen Wicklung an einem Anker des Rotors bezüglich der anderen der mehreren Wicklungen bestimmt ist.

Gemäß einer Ausführungsform kann jede der Wicklungen mit einem von den anderen Wicklungen verschiedenen komplexen Widerstand versehen sein.

Weiterhin kann zur Ansteuerung der Wicklungen ein Kommutator vorgesehen sein, der ein Bürstenpaar und mit den Wicklungen verbundene Schleifkontakte aufweist.

Gemäß einem weiteren Aspekt ist ein Verfahren zum Bestimmen einer Drehzahl eines gleichstrombetriebenen Elektromotors vorgesehen. Das Verfahren umfasst folgende Schritte:
- Bereitstellen eines Frequenzsignals mit einer vorgegebenen Frequenz;
- Einkoppeln des Frequenzsignals auf eine Ansteuerleitung, über die der Elektromotor mit elektrischer Energie versorgt wird;
- Detektieren einer Angabe zum Stehwellenverhältnis mit Hilfe von Angaben einer von dem Signalgenerator zum Elektromotor hinlaufenden Signalwelle des eingekoppelten Frequenzsignals zu einer von dem Elektromotor zu dem Signalgenerator laufenden Signalwelle des an dem Elektromotor reflektierten Frequenzsignals; und
- Bereitstellen der Angabe zum Stehwellenverhältnis.

Weiterhin kann der Angabe zum Stehwellenverhältnis eine absolute Winkellage zugeordnet werden.

### Kurzbeschreibung der Zeichnungen

Bevorzugte Ausführungsformen werden nachfolgend anhand der beigefügten Zeichnungen näher erläutert. Es zeigen:
Figur 1 eine schematische Darstellung eines Motorsystems mit einer Vorrichtung zum Bestimmen der absoluten Winkellage des Rotors eines Gleichstrommotors;
Figur 2 eine Querschnittsdarstellung eines zehnpoligen Gleichstrommotors;
Figuren 3a und 3b verschiedene Kommutatorstellungen;
Figur 4 eine schematische Darstellung einer Schaltung zur Messung eines Stehwellenverhältnisses;
Figur 5 ein Diagramm zur Darstellung der Abhängigkeit des Stehwellenverhältnisses von verschiedenen Rotorlagen.

### Beschreibung von Ausführungsformen

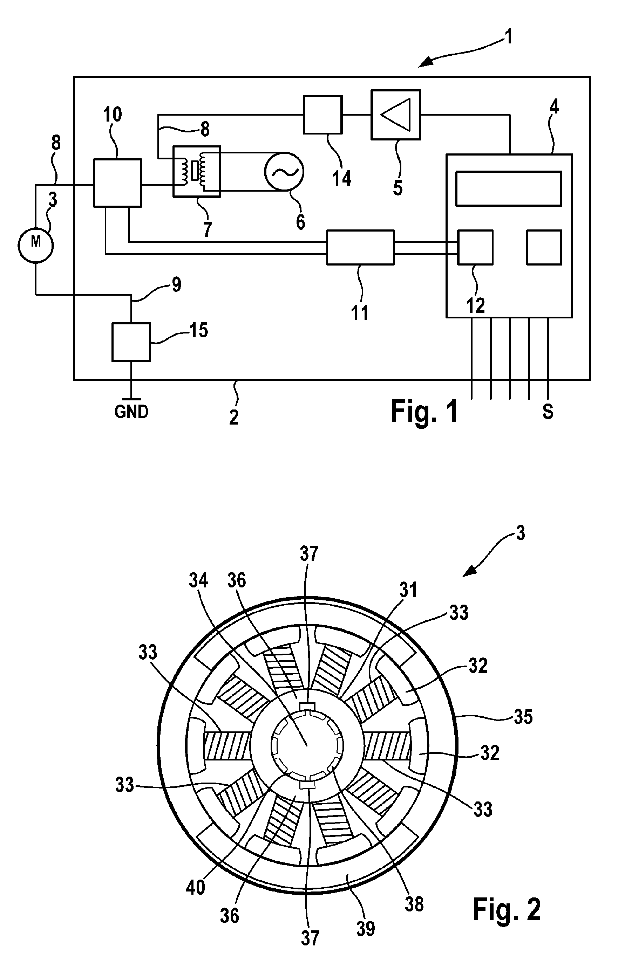

Figur 1 zeigt eine schematische Darstellung eines Motorsystems 1 mit einem Steuergerät 2, an das ein Gleichstrommotor 3 angeschlossen ist. Das Steuergerät 2 umfasst einen Mikrocontroller 4 und eine Endstufe 5, die mit Hilfe von (nicht gezeigten) Leistungsschaltern ausgebildet ist. Der Mikrocontroller 4 steuert die Leistungsschalter der Endstufe 5 so an, dass entsprechend einem dem Mikrocontroller 4 von extern vorgegebenen Steuersignal S eine Gleichspannung über eine Ansteuerleitung 8 an den Gleichstrommotor 3 angelegt wird, um den Gleichstrommotor 3 mit elektrischer Energie zu versorgen. Die Gleichspannung kann beispielsweise mit Hilfe eines Pulsmodulationsverfahrens, insbesondere eines Pulsweitenmodulationsverfahrens, bereitgestellt werden, bei dem ein von der Stellgröße abhängiges Tastverhältnis angelegt wird. Der Gleichstrommotor 3 ist mit einem ersten Anschluss mit der Ansteuerleitung 8 und mit einem zweiten Anschluss über eine Masseleitung 9 mit einem Masseanschluss GND verbunden.

Weiterhin ist ein Oszillator 6 vorgesehen, der ein elektrisches Frequenzsignal, insbesondere ein Spannungssignal, bereitstellt, das mit Hilfe eines Kopplungselements 7 in eine Ansteuerleitung 8 eingekoppelt wird. Die Einkopplung des Frequenzsignals kann beispielsweise induktiv oder kapazitiv in an sich bekannter Weise erfolgen. Beispielsweise kann das Frequenzsignal transformatorisch in die Ansteuerleitung 8 eingekoppelt werden, d.h. eine Primärseite eines Kopplungstransformators ist mit dem Oszillator 6 und eine Sekundärseite des Kopplungstransformators ist seriell in die Ansteuerleitung 8 geschaltet.

Weiterhin können (optional) ein erstes Filterelement 14, das zwischen dem Kopplungselement 7 und der Endstufe 5 angeordnet ist, und ein zweites Filterelement 15, das zwischen dem zweiten Anschluss des Gleichstrommotors 3 und dem Masseanschluss GND angeordnet ist, vorgesehen sein. Die Filterelemente 14, 15 verhindern eine Ausbreitung des von dem Oszillator 6 bereitgestellten Frequenzsignals auf die Signalleitungen der Leistungsschalter der Endstufe 5 und auf die Gleichstromleitungen der Leistungsschalter der Endstufe 5 und damit auch auf andere Bereiche innerhalb und außerhalb des Steuergeräts 2, die von der erzeugten Frequenz nicht beeinflusst werden dürfen.

Die Filterelemente 14, 15 können beispielsweise einen Sperrfilter mit einer Mittenfrequenz aufweisen, die der vom Oszillator 6 bereitgestellten Frequenz des Frequenzsignals entspricht. Der Sperrfilter filtert Signale eines bestimmten Wellenlängenbereiches heraus. Alternativ können die Filterelemente 14, 15 beispielsweise einen Tiefpassfilter mit einer Grenzfrequenz aufweisen, die unter der vom Oszillator 6 bereitgestellten Frequenz des Frequenzsignals liegt.

Zwischen dem Kopplungselement 7 und dem Gleichstrommotor 3 ist ein Messelement 10 angeordnet, mit dem eine Angabe über die Größe eines reflektierten Frequenzsignals auf der Ansteuerleitung 8 detektierbar ist. Die Angabe wird in geeigneter Weise über eine Signalaufbereitungseinheit 11 an eine Spannungsmesseinheit 12 des Mikrocontrollers 4 kommuniziert.

Wie in der Draufsicht auf eine Schnittansicht des Gleichstrommotors 3 in axialer Richtung der Figur 2 dargestellt ist, weist der Gleichstrommotor 3 fünf Wicklungen 32 auf, die jeweils zwei bezüglich einer Rotorwelle 34 des Rotors 31 gegenüberliegende Spulenelemente 33 umfassen. Ein Stator 35 des Elektromotors 3 weist einander gegenüberliegende Pole 39 eines oder mehrerer Permanentmagneten auf und ist um den Rotor 31 angeordnet, so dass sich der Rotor 31 um die Rotorwelle 34 frei im Inneren des Stators 35 drehen kann.

Der Gleichstrommotor 3 ist im vorliegenden Ausführungsbeispiel so vorgesehen, dass deren Wicklungen 32 mit Hilfe eines Kommutators 36 elektrisch kontaktiert werden können. Der Kommutator 36 weist dazu um die Rotorwelle 34 angeordnete Schleifkontakte 38 auf, die jeweils mit einer Wicklung 32 in Verbindung stehen. Die Schleifkontakte 38 sind voneinander durch Nuten 40 elektrisch isoliert. Jeweils einander gegenüberliegende Schleifkontakte 38 kontaktieren eine der Wicklungen 32. Die Schleifkontakte 38 werden je nach Winkellage mit Hilfe eines Bürstenpaares 37 mit einander bezüglich der Rotorwelle 34 gegenüberliegenden Bürsten kontaktiert. Allgemein sind die Schleifkontakte 38 und die Bürsten des Bürstenpaares 37 so angeordnet, dass bei einer bestimmten Stellung des Rotors 31 die Bürsten des Bürstenpaares 37 genau eine Wicklung 32 des Rotors 31 kontaktieren.

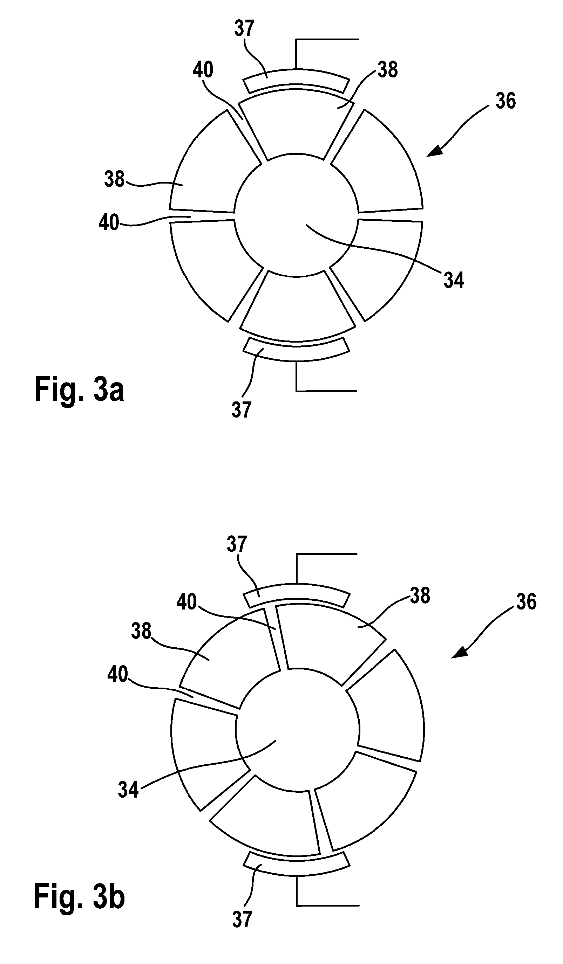

Der Kommutator 36 kann, wie in den Figuren 3a und 3b dargestellt ist, ausgebildet sein, um bezüglich des Rotors 31 die zwei (in den Figuren 3a und 3b gezeigten) Kontaktierungszustände einzunehmen, die bei einer Rotation des Rotors 31 wechselweise eingenommen werden. In dem in Figur 3a gezeigten Rotationszustand kontaktiert ein Bürstenpaar 37 des Kommutators 36 eine einzelne Wicklung 32 des Gleichstrommotors 3 und beim Kontaktierungszustand der Figur 3b kontaktiert das Bürstenpaar 37 des Kommutators 36 zwei Wicklungen 32 des Gleichstrommotors 3 über Nuten 40 zwischen zwei benachbarten Schleifkontakten 38 hinweg. Allgemein kann das Bürstenpaar 37 eine erste Anzahl von Wicklungen 32 in einem Kontaktierungszustand und eine zweite Anzahl von Wicklungen 32 in einem weiteren Kontaktierungszustand kontaktieren.

Weiterhin unterscheiden sich in der Praxis fertigungsbedingt die einzelnen Wicklungen 32 hinsichtlich ihres komplexen Widerstands, so dass jeder Wicklung 32 ein individueller komplexer Widerstand zugeordnet werden kann. Wird festgestellt, dass die Unterschiede zwischen den komplexen Widerständen der einzelnen Wicklungen 32 nicht ausreichend groß sind, so können diese mit geeigneten passiven Bauelementen beschaltet werden, um jede der Wicklungen 32 mit einem individuellen komplexen Widerstand zu versehen, der sich von dem komplexen Widerstand mindestens einer der übrigen Wicklungen 32 unterscheidet. Die Auswertung des komplexen Widerstands derjenigen Spulenwicklung 32 des Rotors 31, die gerade durch das Bürstenpaar 37 kontaktiert wird, kann somit eine Angabe über die absolute Winkellage des Rotors 31 des Gleichstrommotors 3 angeben.

Um den komplexen Widerstand einer der Spulenwicklungen 32 des Elektromotors 3 von anderen Spulenwicklungen 32 unterscheidbar zu machen, kann beispielsweise eine veränderte Lage der Spulenwicklung 32 auf den Ankern des Rotors 31, eine Schichtung der Spulenwicklung 32, eine Serienschaltung der Spulenwicklung 32 mit einem Bauelement mit einem realen bzw. komplexen Widerstand, eine Parallelschaltung der Spulenwicklung 32 mit einem Bauelement mit einem realen und/oder komplexen Widerstand oder das Vorsehen eines verschiedenen magnetisch aktiven Materials im Inneren der Spulen der Spulenwicklungen 32 vorgesehen werden. Auch andere Maßnahmen wie z.B. eine von den anderen Spulenwicklungen 32 abweichende Windungszahl und dergleichen sind denkbar, solange sie nicht den gewünschten Betrieb des Elektromotors beeinträchtigen, insbesondere nicht eine Unwucht in dem Rotor 31 des Gleichstrommotors 3 hervorrufen.

Wenn eine bestimmte Spulenwicklung 32 mit dem eingestellten elektrischen Parameter über den Kommutator 36 kontaktiert wird, befindet sich der Kommutator 36 in einer bestimmten Kommutatorstellung. Da der Kommutator 36 fest mit der Rotorwelle 34 des Gleichstrommotors 3 verbunden ist, ist damit auch die Winkellage der Rotorwelle 34 bestimmbar. Auch können mehrere oder alle Spulenwicklungen 32 mit unterschiedlichen elektrischen Parametern, insbesondere mit unterschiedlichen elektrischen Induktivitäten, versehen sein, so dass mehrere, insbesondere der doppelten Anzahl der Spulenwicklungen 32 entsprechende, absolute Winkellagen der Rotorwelle 34 unterschieden werden können. Allgemein bestimmt die Anzahl der Schleifkontakte 38 die mögliche Auflösung bzw. die Anzahl der detektierbaren Winkellagen der Rotorwelle 34. Durch Detektieren einer Abfolge von sich aus den elektrischen Parametern ergebenden elektrischen Größen bei einem Betrieb des Gleichstrommotors 3 kann weiterhin eine Drehrichtung der Rotorwelle 34 und deren Drehgeschwindigkeit ermittelt werden.

Das momentan von dem Bürstenpaar 37 kontaktierte Spulenpaar 33 wird wie folgt festgestellt. Der Oszillator 6 erzeugt ein Frequenzsignal, das über das Kopplungselement 7 auf die Ansteuerleitung 8, über die der Gleichstrommotor 3 mit elektrischer Energie versorgt wird, eingekoppelt wird.

Abhängig von einer Rotorlage liegen zwischen den Bürstenpaaren verschiedene komplexe Widerstände. Das von dem Oszillator 6 in die Ansteuerleitung 8 eingekoppelte Frequenzsignal wird an den Gleichstrommotor 3 angelegt, wo es abhängig von dem momentanen komplexen Widerstand zu einem bestimmten Anteil reflektiert wird. Das Amplitudenverhältnis der Amplitude des eingekoppelten Frequenzsignals und des reflektierten Frequenzsignals wird durch das Messelement 10 ermittelt.

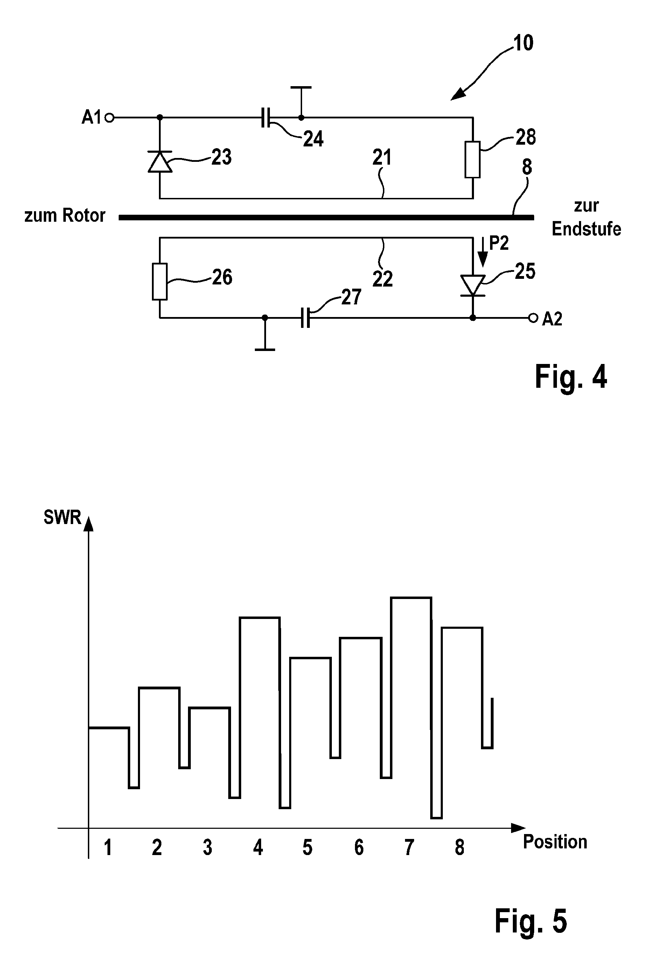

Das Messelement 10 ist in Figur 4 detaillierter dargestellt. Das Stehwellenmesselement 10 umfasst zwei Detektionsleitungen 21, 22, die an einem Abschnitt der Ansteuerleitung 8 angeordnet sind. Die Detektionsleitungen 21, 22 weisen eine bestimmte Länge auf, mit der sie an die Ansteuerleitung 8 gekoppelt sind. Die Länge der Detektionsleitungen 21, 22 wird abhängig von der Wellenlänge der Frequenz des eingekoppelten Frequenzsignals vom Oszillator 6 gewählt. Ein Frequenzsignal auf der Ansteuerleitung 8 wird somit auf die Detektionsleitungen 21, 22 induktiv und kapazitiv eingekoppelt.

Die erste Detektionsleitung 21, die im gezeigten Ausführungsbeispiel parallel und benachbart zur Ansteuerleitung 8 angeordnet ist, ist auf der dem Gleichstrommotor 3 zugewandten Seite mit einer Anode einer ersten Gleichrichterdiode 23 verbunden. Die dem Gleichstrommotor 3 abgewandten Seite, die in Richtung der Endstufe 5 gerichtet ist, ist über einen ersten Widerstand 28 mit einem Massepotenzial GND verbunden. Die Katode der ersten Gleichrichterdiode 23 ist mit einem ersten Anschluss eines ersten Kondensators 24 verbunden. Ein zweiter Anschluss des ersten Kondensators 24 ist mit dem Massepotenzial GND verbunden. Zwischen der ersten Gleichrichterdiode 23 und dem ersten Kondensator 24 befindet sich ein erster Anschluss A1 zum Abgriff einer Angabe der Amplitude des zu dem Gleichstrommotor 3 hinlaufenden eingekoppelten Frequenzsignals.

Die Amplitude der Frequenz des eingekoppelten Frequenzsignals wird gemessen, indem die Wechselspannung der Frequenz durch die erste Gleichrichterdiode 23 gleichgerichtet wird und damit der Kondensator 24 aufgeladen wird. Ein Stromfluss in Richtung des Gleichstrommotors 3 führt zu einem Aufladen des Kondensators, so dass sich dort entsprechend die Kondensatorspannung als eine Messspannung aufbaut. Die Kondensatorspannung des ersten Kondensators 24 stellt beispielsweise ein Maß für die Amplitude der Frequenz des eingekoppelten Frequenzsignals dar.

Die zweite Detektionsleitung 22 ist an einem dem Gleichstrommotor 3 zugewandten Ende über einen zweiten Widerstand 26 mit dem Massepotenzial GND und mit dem der Endstufe 5 zugewandten Ende mit einem Anodenanschluss einer zweiten Gleichrichterdiode 25 verbunden. Ein Kathodenanschluss der Gleichrichterdiode 25 ist mit einem ersten Anschluss eines zweiten Kondensators 27 verbunden. Der zweite Anschluss des zweiten Kondensators 27 ist mit dem Massepotential GND verbunden. Ein Stromfluss in Richtung der Endstufe 5 führt zu einem Aufladen des zweiten Kondensators 27. Die Spannung über dem Kondensator 27 stellt nun ein Maß für ein zur Endstufe 5 zurücklaufendes Frequenzsignal dar. Die Kondensatorspannung wird an einem zweiten Anschluss A2, der dem Kathodenanschluss der zweiten Diode 25 entspricht, abgegriffen.

Die beiden Spannungsgrößen an dem ersten Anschluss A1 und dem zweiten Anschluss A2 werden über ein Signalaufbereitungselement 11, das beispielsweise eine weitere Glättung der Kondensatorspannungen der Kondensatoren 24 und 27 sowie eine Anpassung der Spannungshöhe an den Detektionsbereich des in dem Mikrocontroller 4 vorgesehenen Spannungsmessers 12 vornimmt, dem Mikrocontroller 4 zugeführt. Das Verhältnis der Spannungen an den Anschlüssen A1, A2 wird Stehwellenverhältnis genannt und stellt ein Maß für den Anteil des reflektierten Frequenzsignals dar.

Das Stehwellenverhältnis SWR ist im Allgemeinen ein Begriff aus der Funktechnik, mit dem die Güte der Abstimmung einer Antenne auf eine bestimmte Frequenz gemessen wird. Ist das Abstimmungsverhältnis optimal, so ist das Verhältnis von gesendetem und reflektiertem Signal 1:1, d.h. es wird eine stehende Welle auf der Leitung ausgebildet.

In Figur 5 ist ein Beispiel für den Verlauf des Stehwellenverhältnisses SWR bezüglich einer Position des Rotors 31 des Gleichstrommotors 3 dargestellt. Die Position des Rotors 31 ist bezüglich ihrer acht verschiedenen Spulenwicklungen 1 bis 8 gekennzeichnet. Man erkennt verschiedene Stehwellenverhältnisse SWR bei den verschiedenen Rotorpositionen. Zwischen den Stehwellenverhältnissen SWR bricht das Stehwellenverhältnis SWR ein, wenn das Bürstenpaar gleichzeitig mehrere Spulenpaare kontaktiert.

## Patentansprüche

1. Vorrichtung zum Bestimmen einer absoluten Winkellage eines Rotors (31) eines Elektromotors (3), umfassend:
- einen Signalgenerator (6) zum Bereitstellen eines Frequenzsignals mit einer vorgegebenen Frequenz;
- ein Kopplungselement (7), um das Frequenzsignal auf eine Ansteuerleitung (8), über die der Elektromotor (3) mit elektrischer Energie versorgt wird, einzukoppeln;
- ein Messelement, um eine Angabe zum Stehwellenverhältnis einer von dem Signalgenerator (6) zum Elektromotor (3) hinlaufenden Signalwelle des eingekoppelten Frequenzsignals zu einer von dem Elektromotor (3) zu dem Signalgenerator (6) laufenden Signalwelle des an dem Elektromotor (3) reflektierten Frequenzsignals zu detektieren und die Angabe zum Stehwellenverhältnis bereitzustellen.

2. Vorrichtung nach Anspruch 1, wobei das Kopplungselement (7) das Frequenzsignal transformatorisch oder kapazitiv auf die Ansteuerleitung (8) einkoppelt.

3. Vorrichtung nach Anspruch 1 oder 2, wobei ein Filterelement vorgesehen ist, um das von dem Kopplungselement (7) eingekoppelte Frequenzsignal an einer Ausbreitung über die Ansteuerleitung (8) zu hindern.

4. Vorrichtung nach einem der Ansprüche 1 bis 3, wobei das Messelement eine erste Detektionsleitung (21), die mit der Ansteuerleitung (8) gekoppelt ist, um das eingekoppelte Frequenzsignal zu detektieren, und eine erste Auswerteschaltung aufweist, um eine Angabe über die Amplitude einer zum Elektromotor (3) laufenden Signalwelle des eingekoppelten Frequenzsignals bereitzustellen und
wobei weiterhin das Messelement eine zweite Detektionsleitung (22), die mit der Ansteuerleitung (8) gekoppelt ist, um das an dem Elektromotor (3) reflektierte Frequenzsignal zu detektieren, und eine zweite Auswerteschaltung aufweist, um eine Angabe über die Amplitude der vom Elektromotor (3) kommenden Signalwelle des reflektierten Frequenzsignals bereitzustellen.

5. Vorrichtung nach Anspruch 4, wobei eine Auswerteeinheit vorgesehen ist, um aus den Angaben über die Amplitude der zum Elektromotor (3) laufenden Signalwelle des eingekoppelten Frequenzsignals und über die Amplitude der vom Elektromotor (3) kommenden Signalwelle des reflektierten Frequenzsignals das Stehwellenverhältnis zu ermitteln und dieses der absoluten Winkellage des Elektromotors (3) zuzuordnen.

6. Motorsystem (1) mit einer Vorrichtung nach einem der Ansprüche 1 bis 5 und mit einem Elektromotor (3) mit einem Rotor (31) mit mehreren, abhängig von der Winkellage ansteuerbaren Wicklungen (32), die jeweils ein oder mehrere Spulenelemente (33) aufweisen, wobei der komplexe Widerstand mindestens einer der Wicklungen (32) von dem komplexen Widerstand der anderen der mehreren Wicklungen (32) verschieden ist.

7. Motorsystem (1) nach Anspruch 6, wobei der komplexe Widerstand der mindestens einen Wicklung (32)
- durch serielles oder paralleles Verschalten mit einem Bauelement mit einem imaginären Widerstand; und/oder
- durch eine veränderte Anzahl von Windungen der Spulenelemente (33) mindestens einer Wicklung (32); und/oder
- durch eine geschichtete Anordnung der Spulenelemente (33) der mindestens einen Wicklung (32) an einem Anker des Rotors (31) bezüglich der anderen der mehreren Wicklungen (32); und/oder
- durch eine veränderte Lage eines der Spulenelemente (33) der mindestens einen Wicklung (32) an einem Anker des Rotors (31) bezüglich der anderen der mehreren Wicklungen (32) bestimmt ist.

8. Elektromotor (3) nach Anspruch 6 oder 7, wobei jede der Wicklungen (32) mit einem von den anderen Wicklungen (32) verschiedenen komplexen Widerstand versehen ist.

9. Elektromotor (3) nach einem der Ansprüche 6 bis 8, wobei zur Ansteuerung der Wicklungen (32) ein Kommutator (36) vorgesehen ist, der ein Bürstenpaar (37) und mit den Wicklungen (32) verbundene Schleifkontakte (38) aufweist.

10. Verfahren zum Bestimmen einer absoluten Winkellage eines gleichstrombetriebenen Elektromotors (3) mit folgenden Schritten:
- Bereitstellen eines Frequenzsignals mit einer vorgegebenen Frequenz;
- Einkoppeln des Frequenzsignals auf eine Ansteuerleitung (8), über die der Elektromotor (3) mit elektrischer Energie versorgt wird;
- Detektieren einer Angabe zum Stehwellenverhältnis mit Hilfe von Angaben einer von dem Signalgenerator (6) zum Elektromotor (3) hinlaufenden Signalwelle des eingekoppelten Frequenzsignals zu einer von dem Elektromotor (3) zu dem Signalgenerator (6) laufenden Signalwelle des an dem Elektromotor (3) reflektierten Frequenzsignals; und
- Bereitstellen der Angabe zum Stehwellenverhältnis.

11. Verfahren nach Anspruch 10, wobei der Angabe zum Stehwellenverhältnis eine absolute Winkellage zugeordnet wird.
